# EUROPEAN PATENT APPLICATION

(11) **EP 4 851 796 A1**
(43) Date of publication of application: **09.12.2026**
(21) Application number: 25760628.5
(22) Date of filing: 02.01.2025
(51) Int. Cl.: G06F 9/455

(54) **VIRTUAL MACHINE MIGRATION METHOD AND APPARATUS, OFFLOADING CARD, DEVICE, AND SYSTEM**

(30) Priority: 28.02.2024 CN 202410224253
(71) Applicant: HUAWEI TECHNOLOGIES CO., LTD., Shenzhen, Guangdong 518129 (CN)
(72) Inventor: TANG, Shaofei, Shenzhen, Guangdong 518129 (CN); MAO, Xiubin, Shenzhen, Guangdong 518129 (CN); ZHAO, Sicheng, Shenzhen, Guangdong 518129 (CN)
(74) Representative: Huawei European IPR
(86) International application number: PCT/CN2025/070280
(87) International publication number: WO 2025/180084

(57) **Abstract**

A virtual machine migration method, an apparatus, an offload card, a device, and a system are disclosed, and relate to the computer field. The method includes: When a virtual machine is migrated from a source device to a destination device, the source device receives a service packet sent by an external device to the virtual machine on the source device, and an offload card of the source device transmits, based on a tunnel between the source device and the destination device, service data included in the service packet to an offload card of the destination device. The offload card of the destination device feeds back a response packet through the tunnel between the source device and the destination device, or feeds back a response packet to the external device based on a tunnel between the destination device and the external device. A packet to or from the virtual machine is processed and forwarded in real time, thereby avoiding a packet loss phenomenon during virtual machine migration, reducing occupied storage space of a VMM or occupied storage space of the source device, reducing participation of a processor of the source device in packet processing, reducing a packet processing latency, causing the destination device to restart the virtual machine in a timely manner, and effectively shortening a virtual machine migration latency.

## Description

This application claims priority to Chinese Patent Application No. 202410224253.0, filed with the China National Intellectual Property Administration on February 28, 2024 and entitled "VIRTUAL MACHINE MIGRATION METHOD, APPARATUS, OFFLOAD CARD, DEVICE, AND SYSTEM", which is incorporated herein by reference in its entirety.

### TECHNICAL FIELD

This application relates to the computer field, and in particular, to a virtual machine migration method, an apparatus, an offload card, a device, and a system.

### BACKGROUND

Currently, during virtual machine migration, packet loss may occur because a virtual machine temporarily shuts down and suspends packet receiving and sending. In a high-bandwidth scenario, the packet loss may be more severe. Generally, a reliability mechanism is used for packet retransmission, but not all protocols support a reliability transmission mechanism. In addition, packet retransmission causes network congestion and a long virtual machine migration latency. Alternatively, a virtual machine monitor (Virtual Machine Monitor, VMM) may be used to cache packets, but this may raise high requirements on storage space of the virtual machine monitor; and the virtual machine migration latency is increased due to retrieving packets from the cache.

### SUMMARY

This application provides a virtual machine migration method, an apparatus, an offload card, a device, and a system, to effectively shorten a virtual machine migration latency and resolve a problem of a packet loss during virtual machine migration.

According to a first aspect, a virtual machine migration method is provided. The method includes: When a virtual machine is migrated from a first computer device to a second computer device, the first computer device receives a first service packet sent by a third computer device to the virtual machine on the first computer device, and an offload card of the first computer device transmits, based on a first tunnel between the offload card of the first computer device and an offload card of the second computer device, first service data included in the first service packet to the offload card of the second computer device. The third computer device includes a computer device other than the first computer device and the second computer device.

To address a packet loss during virtual machine migration, a packet is retransmitted by using a reliability mechanism or a packet is buffered using a VMM, resulting in a problem of long virtual machine migration time. Compared with such a method, in the virtual machine migration method provided in this application, a lossless packet relay mechanism used during virtual machine migration is provided based on an offloading capability of the offload card and a tunneling technology. To be specific, after the virtual machine is migrated from the first computer device to the second computer device, the offload card of the first computer device processes a packet sent by the third computer device to the virtual machine on the first computer device, and forwards the packet to the second computer device through the tunnel. In this way, a packet of the virtual machine can be processed and forwarded in real time during virtual machine migration, to avoid a packet loss phenomenon during virtual machine migration. In addition, there is no need for the VMM to buffer a packet or there is no need to retransmit a packet by using the reliability mechanism, so as to reduce occupied storage space of the VMM or occupied storage space of the first computer device, reduce participation of a processor of the first computer device in packet processing, reduce a packet processing latency, cause the second computer device to restart the virtual machine in a timely manner, and effectively shorten a virtual machine migration latency.

In a possible implementation, that the offload card of the first computer device transmits the first service data to the offload card of the second computer device based on the first tunnel includes: The offload card of the first computer device modifies the first service packet based on a first tunnel entry, to obtain a first relay service packet, and transmits the first relay service packet to the offload card of the second computer device based on the first tunnel. A packet header of the first relay service packet is different from a packet header of the first service packet. The first relay service packet includes the first service data. The first tunnel entry indicates a transmission rule for data transmission between the offload card of the first computer device and the offload card of the second computer device.

Because the virtual machine is migrated from the first computer device to the second computer device, after the first computer device receives the packet sent to the virtual machine, the first computer device as a relay device only needs to modify a packet header of the packet, and sends, to the second computer device through the tunnel, data sent to the virtual machine, to achieve an effect of no packet loss during virtual machine migration.

In another possible implementation, a source address in the first service packet indicates an address of the third computer device, and a destination address in the first service packet indicates an address of the first computer device; and that the offload card of the first computer device modifies the first service packet based on the first tunnel entry, to obtain the first relay service packet includes: modifying the source address in the first service packet to the address of the first computer device, modifying the destination address in the first service packet to an address of the second computer device, and modifying a virtual eXtensible local area network identifier VNI in the first service packet to a first VNI, to obtain the first relay service packet, where a first virtual eXtensible local area network indicated by the first VNI includes the first computer device and the second computer device.

In another possible implementation, the first service packet further includes an identifier of the virtual machine. The method further includes: The offload card of the first computer device determines the first tunnel entry based on the identifier of the virtual machine and the first virtual eXtensible local area network identifier (Virtual eXtensible Local Area Network Identifier, VNI). The first virtual eXtensible local area network indicated by the first VNI includes the first computer device and the second computer device.

Because different tunnels are established between different devices, the tunnels are managed based on tunnel entries, to allow the devices to forward packets based on the tunnel entries.

In another possible implementation, before that the offload card of the first computer device transmits the first service data to the offload card of the second computer device based on the first tunnel, the method further includes: The offload card of the first computer device establishes the first tunnel.

The first tunnel is established, so that the first computer device as the relay device forwards a packet to the second computer device, to achieve an effect of no packet loss during virtual machine migration.

In another possible implementation, after that the offload card of the first computer device transmits the first service data to the offload card of the second computer device based on the first tunnel, the method further includes: The offload card of the first computer device receives, based on the first tunnel, a first relay response packet sent by the offload card of the second computer device, modifies the first relay response packet based on a second tunnel entry, to obtain a first response packet, and transmits the first response packet to the third computer device based on a second tunnel. A packet header of the first relay response packet is different from a packet header of the first response packet. The first relay response packet includes first response data. The first response packet includes the first response data. The first response data is result data obtained by processing the first service data by the offload card of the second computer device. The second tunnel entry indicates a transmission rule for data transmission between the offload card of the first computer device and an offload card of the third computer device. The second tunnel is used to provide a path for data transmission between the offload card of the first computer device and the offload card of the third computer device.

In this case, the first computer device as the relay device modifies a packet header of a relay response packet, and sends response data of the virtual machine to the third computer device through the tunnel, so that a packet of the virtual machine can be processed and forwarded in real time during virtual machine migration, to achieve an effect of no packet loss during virtual machine migration.

In another possible implementation, a source address in the first relay response packet indicates the address of the second computer device, and a destination address in the first relay response packet indicates the address of the first computer device. That the offload card of the first computer device modifies the first relay response packet based on the second tunnel entry, to obtain the first response packet includes: modifying the source address in the first relay response packet to the address of the first computer device, modifying the destination address in the first relay response packet to the address of the third computer device, and modifying a VNI in the first relay response packet to a second VNI, to obtain the first relay service packet, where a second virtual eXtensible local area network indicated by the second VNI includes the first computer device and the third computer device.

In another possible implementation, the first relay response packet further includes the identifier of the virtual machine. The method further includes: The offload card of the first computer device determines the second tunnel entry based on the identifier of the virtual machine and the second VNI. A second virtual eXtensible local area network indicated by the second VNI includes the first computer device and the third computer device.

In another possible implementation, the method further includes: The offload card of the first computer device deletes the first tunnel and the second tunnel according to an instruction.

In this case, a third tunnel is established between the offload card of the second computer device and the offload card of the third computer device, without forwarding the packet of the virtual machine via the first computer device as the relay device, and the tunnels can be deleted in a timely manner, to avoid occupation of a compute resource and a storage resource, and improve resource utilization.

In another possible implementation, when the virtual machine is migrated from the second computer device to the first computer device, the offload card of the first computer device receives the first relay service packet based on the first tunnel, where the first relay service packet includes the first service data sent by the third computer device to the virtual machine on the second computer device, and the first tunnel is used to provide a path for data transmission between the offload card of the first computer device and the offload card of the second computer device; the offload card of the first computer device processes the first service data to obtain the first response data; and when no third tunnel is established between the offload card of the first computer device and the offload card of the third computer device, the offload card of the first computer device sends the first relay response packet to the offload card of the second computer device based on the first tunnel, where the first relay response packet includes the first response data, and the third tunnel is used to provide a path for data transmission between the offload card of the second computer device and the offload card of the third computer device; or when a third tunnel is established between the offload card of the first computer device and the offload card of the third computer device, the offload card of the first computer device sends the first response packet to the offload card of the third computer device based on the second tunnel, where the first response packet includes the first response data.

In another possible implementation, the method further includes: The offload card of the first computer device generates the first relay response packet based on the first tunnel entry, where in the first relay service packet, a source address indicates the address of the first computer device, and a destination address indicates the address of the second computer device.

In another possible implementation, the method further includes: The offload card of the first computer device generates the first response packet based on the second tunnel entry, where in the first response packet, a source address indicates the address of the first computer device, and a destination address indicates the address of the third computer device.

According to a second aspect, a virtual machine migration method is provided. The method includes: When a virtual machine is migrated from a first computer device to a second computer device, the first computer device receives a first service packet sent by a third computer device to the virtual machine on the first computer device, where the first service packet includes first service data; and an offload card of the first computer device transmits the first service data to an offload card of the second computer device based on a first tunnel, where the first tunnel is used to provide a path for data transmission between the offload card of the first computer device and the offload card of the second computer device.

In a possible implementation, that the offload card of the first computer device transmits the first service data to the offload card of the second computer device based on the first tunnel includes: The offload card of the first computer device modifies the first service packet based on a first tunnel entry, to obtain a first relay service packet, where a packet header of the first relay service packet is different from a packet header of the first service packet, the first relay service packet includes the first service data, and the first tunnel entry indicates a transmission rule for data transmission between the offload card of the first computer device and the offload card of the second computer device; and the offload card of the first computer device transmits the first relay service packet to the offload card of the second computer device based on the first tunnel.

In another possible implementation, the method further includes: The offload card of the second computer device receives the first relay service packet based on the first tunnel, where the first relay service packet includes the first service data sent by the third computer device to the virtual machine on the first computer device, and the first tunnel is used to provide a path for data transmission between the offload card of the first computer device and the offload card of the second computer device; the offload card of the second computer device processes the first service data to obtain first response data; and when no third tunnel is established between the offload card of the second computer device and an offload card of the third computer device, the offload card of the second computer device sends a first relay response packet to the offload card of the first computer device based on the first tunnel, where the first relay response packet includes the first response data; or when a third tunnel is established between the offload card of the second computer device and the offload card of the third computer device, the offload card of the second computer device sends a first response packet to the offload card of the third computer device based on the third tunnel, where the first response packet includes the first response data, and the third tunnel is used to provide a path for data transmission between the offload card of the second computer device and the offload card of the third computer device.

In another possible implementation, after that the offload card of the first computer device transmits the first service data to the offload card of the second computer device based on the first tunnel, the method further includes: The offload card of the first computer device receives, based on the first tunnel, the first relay response packet sent by the offload card of the second computer device, where the first relay response packet includes the first response data, and the first response data is result data obtained by processing the first service data by the offload card of the second computer device; the offload card of the first computer device modifies the first relay response packet based on a second tunnel entry, to obtain the first response packet, where a packet header of the first relay response packet is different from a packet header of the first response packet, the first response packet includes the first response data, and the second tunnel entry indicates a transmission rule for data transmission between the offload card of the first computer device and the offload card of the third computer device; and the offload card of the first computer device transmits the first response packet to the third computer device based on a second tunnel, where the second tunnel is used to provide a path for data transmission between the offload card of the first computer device and the offload card of the third computer device.

In another possible implementation, the method further includes: When the third tunnel is established between the offload card of the second computer device and the offload card of the third computer device, the offload card of the second computer device receives, based on the third tunnel, a second service packet sent by the offload card of the third computer device, where the second service packet includes second service data sent by the third computer device to a virtual machine on the second computer device; the offload card of the second computer device processes the second service data to obtain second response data; and the offload card of the second computer device sends a second response packet to the offload card of the third computer device based on the third tunnel, where the second response packet includes the second response data.

In another possible implementation, the method further includes: When the third tunnel is established between the offload card of the second computer device and the offload card of the third computer device, the second computer device deletes the first tunnel between the second computer device and the first computer device; and the first computer device deletes the first tunnel and the second tunnel according to an instruction.

In another possible implementation, the method further includes: The second computer device restarts the virtual machine.

According to a third aspect, a data processing apparatus is provided. The data processing apparatus includes modules configured to perform the virtual machine migration method in any one of the first aspect or the possible designs of the first aspect. For example, the data processing apparatus includes a communication module and a processing module.

The communication module is configured to receive a first service packet sent by a third computer device to a virtual machine on a first computer device, where the first service packet includes first service data.

The processing module is configured to transmit the first service data to an offload card of a second computer device based on a first tunnel, where the first tunnel is used to provide a path for data transmission between an offload card of the first computer device and the offload card of the second computer device.

In a possible implementation, the processing module is specifically configured to modify the first service packet based on a first tunnel entry, to obtain a first relay service packet. The communication module is further configured to transmit the first relay service packet to the offload card of the second computer device based on the first tunnel. A packet header of the first relay service packet is different from a packet header of the first service packet. The first relay service packet includes the first service data. The first tunnel entry indicates a transmission rule for data transmission between the offload card of the first computer device and the offload card of the second computer device.

In another possible implementation, a source address in the first service packet indicates an address of the third computer device, and a destination address in the first service packet indicates an address of the first computer device. The processing module is specifically configured to: modify the source address in the first service packet to the address of the first computer device, modify the destination address in the first service packet to an address of the second computer device, and modify a virtual eXtensible local area network identifier VNI in the first service packet to a first VNI, to obtain the first relay service packet, where a first virtual eXtensible local area network indicated by the first VNI includes the first computer device and the second computer device.

In another possible implementation, the first service packet further includes an identifier of the virtual machine. The processing module is further configured to determine the first tunnel entry based on the identifier of the virtual machine and the first VNI. The first virtual eXtensible local area network indicated by the first VNI includes the first computer device and the second computer device.

In another possible implementation, the processing module is further configured to establish the first tunnel.

In another possible implementation, the communication module is further configured to receive, based on the first tunnel, a first relay response packet sent by the offload card of the second computer device. The processing module is further configured to modify the first relay response packet based on a second tunnel entry, to obtain a first response packet. The communication module is further configured to transmit the first response packet to the third computer device based on a second tunnel. A packet header of the first relay response packet is different from a packet header of the first response packet. The first relay response packet includes first response data. The first response packet includes the first response data. The first response data is result data obtained by processing the first service data by the offload card of the second computer device. The second tunnel entry indicates a transmission rule for data transmission between the offload card of the first computer device and an offload card of the third computer device. The second tunnel is used to provide a path for data transmission between the offload card of the first computer device and the offload card of the third computer device.

In another possible implementation, the first relay response packet further includes the identifier of the virtual machine. The processing module is further configured to determine the second tunnel entry based on the identifier of the virtual machine and a second VNI. A second virtual eXtensible local area network indicated by the second VNI includes the first computer device and the third computer device

In another possible implementation, the processing module is further configured to delete the first tunnel and the second tunnel according to an instruction.

According to a fourth aspect, an offload card is provided. The offload card includes a processor and a power supply circuit. The power supply circuit is configured to supply power to the processor, and the processor is configured to perform operation steps of the method according to any one of the first aspect or the possible implementations of the first aspect.

According to a fifth aspect, a computer device is provided. The computer device includes a processor and an offload card. The processor is configured to run a virtual machine. When the virtual machine is migrated to another computer device, the offload card is configured to perform operation steps of the method according to any one of the first aspect or the possible implementations of the first aspect, so as to implement relaying of a packet of the virtual machine after virtual machine migration.

According to a sixth aspect, a communication system is provided. The communication system includes a plurality of computer devices, the computer device includes the offload card according to the fourth aspect, and the offload card is configured to perform operation steps of the method according to any one of the first aspect or the possible implementations of the first aspect.

According to a seventh aspect, a computer-readable storage medium is provided. The computer-readable storage medium includes computer software instructions, where when the computer software instructions are run in a processor, the processor is caused to perform operation steps of the method according to any one of the first aspect or the possible implementations of the first aspect.

According to an eighth aspect, a computer program product is provided. When the computer program product is run on a computer, the computer is caused to perform operation steps of the method according to any one of the first aspect or the possible implementations of the first aspect.

For technical effect brought by any design manner of the second aspect to the eighth aspect, refer to technical effect brought by the first aspect or different design manners of the first aspect. Details are not described herein again.

Based on the implementations provided in the foregoing aspects, the implementations in this application may be further combined to provide more implementations.

### BRIEF DESCRIPTION OF DRAWINGS

FIG. 1 is a diagram of an architecture of a communication system according to this application;
FIG. 2 is a diagram of an architecture of virtual machine migration according to this application;
FIG. 3 is a diagram of three phases included in a virtual machine migration procedure according to this application;
FIG. 4a and FIG. 4b are schematic flowcharts of relaying a packet to or from a virtual machine during virtual machine migration according to this application;
FIG. 5 is a schematic flowchart of relaying a packet to or from a virtual machine during virtual machine migration according to this application;
FIG. 6 is a schematic flowchart of transmitting a packet to or from a virtual machine during virtual machine migration according to this application;
FIG. 7 is a diagram of a structure of a data processing apparatus according to this application; and
FIG. 8 is a diagram of a structure of a computer device according to this application.

### DESCRIPTION OF EMBODIMENTS

For ease of understanding, main terms in this application are first explained.

**Virtualization technology:** Refers to a technology abstracting, virtualizing and partitioning hardware resources such as computing, network, storage, and input/output (Input/Output, I/O) resources for use. The virtualization technology can effectively improve utilization and flexibility of the hardware resources.

**Virtual machine (Virtual Machine, VM):** Refers to a complete computer system with full hardware system functions simulated by using software and running in a completely isolated environment. When a virtual machine is established in a physical computer, hard disk and memory capacities of the physical computer can be used as hard disk and memory capacities of the virtual machine. Each virtual machine has independent resources such as a compute resource, a network resource, a storage resource, and an operating system resource. The virtual machine can complete same tasks as the physical computer. For example, the virtual machine may include a Java virtual machine, a Linux virtual machine, or a Windows virtual machine.

**Virtual machine migration:** Is a process of moving a virtual machine between different compute resources or storage resources. For example, a virtual machine is migrated from one physical device to another physical device. Virtual machine migration includes cold migration and live migration.

Cold migration is to migrate a powered-off or suspended virtual machine from a source device to a destination device. During migration, data of the virtual machine is relocated to a new storage location. The data of the virtual machine includes a configuration file and an application file. The configuration file includes configuration data of the virtual machine. The application file includes data of an application run on the virtual machine.

Live migration is to migrate a running virtual machine that is being run from a source device to a destination device, allowing the destination device to smoothly restart the virtual machine. In principle, the entire process needs to be transparent to a tenant of the virtual machine, and impact on a service of the tenant needs to be minimized.

Because the data of the virtual machine may not be transmitted to the destination device at a time, after live migration starts, the source device migrates the data (for example, application data in a memory) of the virtual machine to the destination device through a plurality of iterative copy rounds. When remaining data of the virtual machine is copied for the last time, the source device shuts down the virtual machine, and suspends receiving and sending of a packet of the virtual machine. If an external device sends a packet to the virtual machine on the source device, a packet loss phenomenon may occur.

During live migration, shutdown time of the virtual machine should be minimized to reduce a quantity of lost packets. After virtual machine migration is completed, the destination device restarts the virtual machine and uses a network reliability protocol (such as a retransmission mechanism for a lost packet) to recover a lost packet. However, a packet for a transport-layer protocol (for example, a user datagram protocol (User Datagram Protocol, UDP)) that does not support a reliability mechanism cannot be recovered.

With rapid development of a cloud platform, the virtualization technology has gradually become one of key technologies of the cloud platform. Advancement in fields such as high-performance computing (High-Performance Computing, HPC), cloud computing, and big data, as well as advancement of data processing units (Data Processing Units, DPUs), have promoted widespread application of high-performance network protocols such as remote direct memory access (Remote Direct Memory Access, RDMA) and remote direct memory access over Converged Ethernet (Remote Direct Memory Access over Converged Ethernet, RoCE). The RoCE protocol does not support selective retransmission and is sensitive to a packet loss. That is, all unacknowledged packets are retransmitted after a packet loss occurs, greatly affecting performance. As the high-performance network protocols such as RoCE are gradually deployed in cloud scenarios, extending a live migration function to support high-performance network services such as RoCE has become a trend.

The high-performance network protocols are applied to high-bandwidth and low-latency scenarios, are sensitive to a packet loss and a latency, and support customizable timeout-based disconnection. However, a live migration solution is not friendly to the high-performance network protocols in the following cases.

First, at a short-time virtual machine shutdown phase, a loss of a part of packets is inevitable. In the high-bandwidth scenario, the packet loss phenomenon may be even more severe. Such a packet loss phenomenon during live migration is prone to causing timeout-based disconnection and the like, causing a tenant to perceive live migration.

Second, although a part of lost packets can be recovered by using a mechanism such as a protocol after the virtual machine is restarted, the latency cannot be ensured and performance of a high-performance network may be affected.

Finally, in a virtualization scenario, when the virtual machine externally communicates with a large quantity of objects, that is, a scale of corresponding tunnel entries is large, it is difficult to synchronize tunnel entries to the destination device through live migration at a time. Consequently, even after being restarted on the destination device, the virtual machine still cannot quickly and effectively recover a communication capability.

**Virtual machine monitor (Virtual Machine Monitor, VMM):** The virtual machine monitor is middle-layer software run between a source device and a virtual machine and is configured to manage a virtual machine. The VMM is also referred to as a hypervisor.

**Virtual eXtensible local area network (Virtual eXtensible Local Area Network, VXLAN):** The virtual eXtensible local area network is one of standard network virtualization over layer 3 (Network Virtualization over Layer 3, NVO3) technologies defined by the IETF, and is an extension to a conventional VLAN protocol. The VXLAN features encapsulation of layer 2 (L2) Ethernet frames into UDP packets (that is, L2 over L4) for transmission across layer 3 (L3) networks. A tunnel node in the VXLAN is referred to as a VXLAN tunnel endpoint (VXLAN Tunnel Endpoint, VTEP).

**I/O passthrough:** I/O passthrough is a hardware-based virtualization technology that can virtualize a physical network interface card into a plurality of virtual network interface cards and allows the virtual network interface cards to be passed through to a virtual machine for use. In this way, the virtual machine obtains a same I/O capability as a physical device. High-performance network interface cards typically support a hardware-virtualized passthrough function, such as, single-root I/O virtualization (Single-Root I/O Virtualization).

To resolve problems of a long latency and a packet loss during virtual machine migration, this application provides a virtual machine migration method. To be specific, when a virtual machine is migrated from a source device to a destination device, the source device receives a service packet sent by an external device to the virtual machine on the source device, and an offload card of the source device transmits, based on a tunnel between the source device and the destination device, service data included in the service packet to an offload card of the destination device. The offload card of the destination device feeds back a response packet through the tunnel between the source device and the destination device. After a tunnel is established between the external device and the destination device, the external device transmits the service packet of the virtual machine to the destination device through the tunnel between the external device and the destination device, and the destination device feeds back a response packet to the external device based on the tunnel between the destination device and the external device.

To address a packet loss during virtual machine migration, a packet is retransmitted by using a reliability mechanism or a packet is buffered using a VMM, resulting in a problem of long virtual machine migration time. Compared with such a method, in the virtual machine migration method provided in this application, a lossless packet relay mechanism used during virtual machine migration is provided based on an offloading capability of the offload card and a tunneling technology. To be specific, after the virtual machine is migrated from the source device to the destination device, the offload card of the source device processes a packet sent by the external device to the virtual machine on the source device, and forwards the packet to the destination device through the tunnel. In this way, a packet of the virtual machine can be processed and forwarded in real time during virtual machine migration, to avoid a packet loss phenomenon during virtual machine migration. In addition, there is no need for the VMM to buffer a packet or there is no need to retransmit a packet by using the reliability mechanism, so as to reduce occupied storage space of the VMM or occupied storage space of the source device, reduce participation of a processor of the source device in packet processing, reduce a packet processing latency, cause the destination device to restart the virtual machine in a timely manner, and effectively shorten a virtual machine migration latency.

The virtual machine migration method provided in this application is applicable to a high-performance transmission protocol that is sensitive to a packet loss and a latency, for example, a RoCE protocol.

The following describes in detail the virtual machine migration method provided in this application with reference to the accompanying drawings.

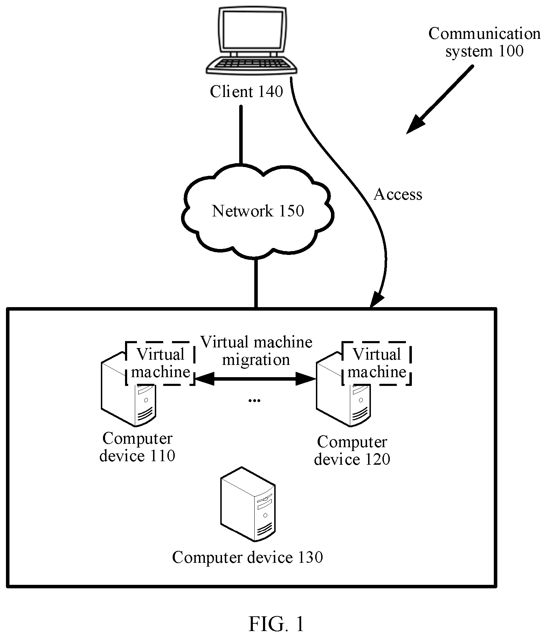

FIG. 1 is a diagram of an architecture of a communication system according to this application. The communication system may be an entity architecture of a cloud system. For example, the communication system 100 includes a plurality of computer devices. The plurality of computer devices include a computer device 110, a computer device 120, and a computer device 130.

The computer device may be a device (for example, a server) that provides a computing function. For example, the computer device may include a compute unit that has a computing capability, such as a central processing unit (Central Processing Unit, CPU), a graphics processing unit (Graphics Processing Unit, GPU), a DPU, a neural processing unit (Neural Processing Unit, NPU), and an embedded neural-network processing unit (Neural-network Processing Unit, NPU), to provide high-performance computing. The computer device may also be referred to as a compute server or an application server. A plurality of servers that provide a computing function can form a compute cluster.

FIG. 1 is merely a diagram. A quantity of devices included in the communication system is not limited in embodiments of this application. For example, the communication system may include a plurality of storage devices, to form a storage system, so as to provide a large storage capacity for the computer device. Optionally, the communication system may further include another device, for example, may further include a network device (for example, a switch or a router). A plurality of computer devices are connected to each other through a network device, and perform data transmission through the network device.

For example, the communication system 100 further includes a client 140 communicating with the plurality of computer devices through a network 150. The network 150 may be an enterprise intranet, for example, a local area network (Local Area Network, LAN) or the internet (Internet).

In this application, a virtual machine is deployed in the computer device. A quantity of virtual machines is not limited in this application. In some embodiments, when services such as high-performance computing and artificial intelligence are deployed in the system, a large quantity of virtual machines are run on the computer device. A virtual machine on one computer device may communicate with virtual machines of a plurality of computer devices. A high-performance tunnel may be established between any two computer devices by using an RDMA protocol and a VXLAN protocol, and data transmission is performed between the computer devices based on the high-performance tunnel.

In some scenarios, a virtual machine needs to be migrated. For example, a virtual machine migration scenario includes maintenance or upgrade of a device on which the virtual machine is located, load balancing, and fault migration.

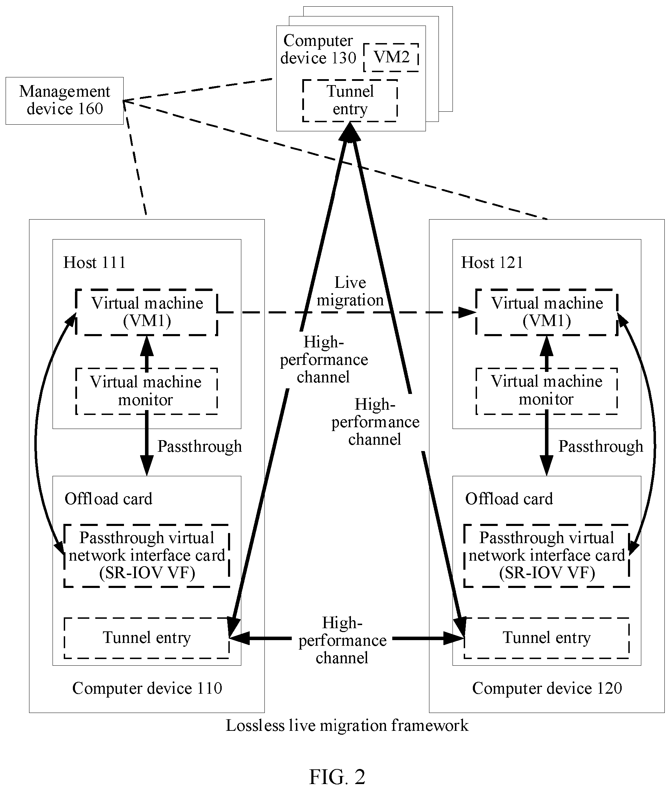

For example, FIG. 2 is a diagram of an architecture of virtual machine migration according to this application. A communication system 100 includes a computer device 110, a computer device 120, and a computer device 130. A VM1 is deployed on the computer device 110, and a VM2 is deployed on the computer device 130. A tunnel is established between the computer device 110 and the computer device 130. For example, a high-performance VXLAN tunnel is established based on a VXLAN protocol. The VM1 of the computer device 110 and the VM2 of the computer device 130 may perform data transmission through the tunnel.

In some embodiments, an offload card of a computer device provides a function of a virtual network interface card for a virtual machine. That is, a tunnel is established between offload cards of two computer devices, to provide a data transmission function between virtual machines on the computer devices.

The offload card may be a system-on-chip that supports flexible programmability, and has a high-computing-power and high-performance data processing capability. For example, the offload card may be a DPU or an intelligent network interface card. In future computing power, the DPU is the third largest chip processor following a CPU and a GPU, is configured to offload complex computing that is difficult for general-purpose computing power to handle, and is mainly used in data-centric scenarios, such as a network, virtualization, storage, and security.

For example, an offload card of the computer device 110 forwards a packet to the computer device 130 based on a tunnel entry. An offload card of the computer device 130 forwards a packet to the computer device 110 based on a tunnel entry. The tunnel entry is used to record a transmission rule for data transmission between the computer devices. Optionally, a tunnel between the computer device 110 and the computer device 130 may be a unidirectional tunnel. The computer device 110 establishes a tunnel from the computer device 110 to the computer device 130, and the computer device 110 transmits data to the computer device 130 based on the tunnel from the computer device 110 to the computer device 130. The computer device 130 establishes a tunnel from the computer device 130 to the computer device 110, and the computer device 130 transmits data to the computer device 110 based on the tunnel from the computer device 130 to the computer device 110.

Optionally, the tunnel entry in this application may be an entry of a VTEP. The tunnel entry includes a source address, a destination address, and a virtual eXtensible local area network identifier (Virtual Extensible Local Area Network Identifier, VNI). The source address indicates a VXLAN tunnel endpoint that sends a packet. The destination address indicates a VXLAN tunnel endpoint that receives the packet. The VNI indicates a virtual eXtensible local area network.

In addition, after receiving a packet, the offload card may transmit, based on an I/O passthrough technology, the packet to a virtual machine run by a host of the computer device, so that the virtual machine run by the host processes the packet. Hardware passthrough can avoid participation of a VMM, reduce dependency between components, and increase a success rate of live migration. For example, the offload card of the computer device 110 receives a packet sent by the computer device 130 to the VM1, the offload card of the computer device 110 may transmit the packet to the VM1 run on a host 111, and the VM1 run by the host 111 processes the packet.

The communication system may further include a management device 160. The management device 160 is configured to provide management functions of a virtual machine in the system. For example, the management functions include deployment, deletion, and migration. In this application, the management device 160 is further configured to provide functions of generating and modifying a tunnel entry.

It should be noted that, in an actual application, one computer device may establish tunnels with a plurality of computer devices to transmit data of a virtual machine. When a virtual machine is migrated from a source device to a destination device, the management device needs to synchronously modify a tunnel entry on a computer device related to the virtual machine, for example, modify an address, in the tunnel entry, of a device on which the virtual machine is located. Due to a large quantity of tunnel entries and a latency for migrating the tunnel entries from an offload card of a source computer device to an offload card of a destination computer device after the management device issues a command, a relatively long latency required to complete switching of all tunnel entries is caused, thereby affecting restart time of the virtual machine.

In this application, the virtual machine is migrated from the source device to the destination device, and the source device as a relay device may provide a relay function to transmit a packet of the virtual machine to the destination device. For example, after receiving the packet sent to the virtual machine, the source device forwards the packet destined for the virtual machine to the destination device through a tunnel between the source device and the destination device. The destination device forwards a response packet to the source device through the tunnel between the source device and the destination device.

It may be understood that, because the virtual machine is migrated from the source device to the destination device, the virtual machine on the source device suspends packet receiving and sending, and the virtual machine on the destination device is not restarted. An external device still sends the packet of the virtual machine to the source device based on the tunnel entry. An appropriate relay occasion is when the virtual machine on the source device is shut down, but binding between the virtual machine on the source device and an I/O passthrough virtual network interface card on the source device is not removed, and the virtual machine on the destination device is not restarted, but binding between the virtual machine on the destination device and an I/O passthrough virtual network interface card on the destination device is established. The I/O passthrough virtual network interface cards associated with the virtual machine on the source device and the virtual machine on the destination device have a packet receiving and sending capability.

For example, after the VM1 is migrated from the computer device 110 to the computer device 120, the computer device 110 as a relay device may forward a packet of the VM1. After receiving the packet sent by the computer device 130 to the VM1, the offload card of the computer device 110 transmits the packet to an offload card of the computer device 120 through a tunnel between the offload card of the computer device 110 and the offload card of the computer device 120, so that the offload card of the computer device 120 processes the packet of the VM1. The offload card of the computer device 120 may also feed back a response packet to the offload card of the computer device 110 through the tunnel between the offload card of the computer device 110 and the offload card of the computer device 120.

After a tunnel is established between the computer device 130 and the computer device 120, the computer device 130 and the computer device 120 may transmit a packet through the tunnel between the computer device 130 and the computer device 120.

Because the virtual machine is migrated from the source device to the destination device, a plurality of external devices communicating with the virtual machine need to modify a tunnel entry. In this application, because the source device, as the relay device, may forward the packet of the virtual machine, the destination device may start the virtual machine before the plurality of external devices complete switching of a tunnel entry. In this way, a virtual machine migration latency is effectively shortened, and the packet of the virtual machine can be processed and forwarded in real time during virtual machine migration, to avoid a packet loss phenomenon during virtual machine migration.

In addition, the offload card carries a service offloaded from an upper layer, may process a packet without participation of a processor (for example, a CPU); and there is no need for a VMM to buffer a packet or there is no need to retransmit a packet by using a reliability mechanism, so as to reduce occupied storage space of the VMM or occupied storage space of the source device, and reduce a packet processing latency.

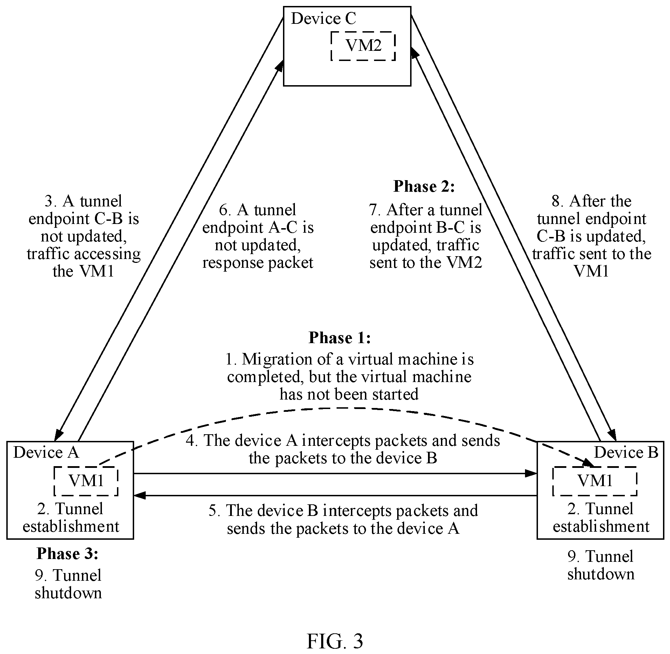

The following describes a virtual machine migration procedure in detail with reference to the accompanying drawings. For example, as shown in FIG. 3, the virtual machine migration procedure provided in this application includes three phases. Herein, the computer device 110, the computer device 120, and the computer device 130 in FIG. 1 are used as an example for description. For ease of description, the computer device 110 may be briefly described as a device A, the computer device 120 may be briefly described as a device B, and the computer device 130 may be briefly described as a device C. The device A may be a source device in virtual machine migration, the device B may be a destination device in virtual machine migration, and the device C may be an external device in virtual machine migration. There may be a plurality of external devices, and one external device is used as an example in the figure for description. Each external device may send a packet to a migrated virtual machine with reference to the method provided in this application.

**Phase 1: A virtual machine is migrated from the source device to the destination device. A tunnel is established between the source device and the destination device, but no tunnel has been established between the external device and the destination device.**
1. A VM1 is migrated from the source device to the destination device, and data migration of the VM1 has been completed. Before the VM1 on the destination device is in a reactive state, virtual network interface cards associated with the VM1 on both the source device and the destination device still have packet sending and receiving capabilities.
2. The source device and the destination device separately establish a tunnel and set the tunnel to an active state. The source device may serve as a relay device, in other words, the source device provides a relay function. The relay function has been offloaded to an I/O passthrough virtual network interface card abstracted by an offload card. The source device establishes a VXLAN tunnel from the source device to the destination device (for example, VTEP-A-B) for transmitting packets of the VM1 by the source device to the destination device. The destination device establishes a VXLAN tunnel from the destination device to the source device (for example, VTEP-B-A) for transmitting packets of the VM1 by the destination device to the source device.
3. Because a tunnel entry of the external device has not been updated, for all traffic accessing the VM1, the external device still sends packets of the VM1 to the source device. For example, a VM2 on the device C sends packets to the VM1. Because a tunnel entry stored in the device C indicates to send packets to the device A, the device C still sends packets of the VM1 to the device A.
4. In a relay active state, the source device intercepts packets destined for the VM1 and forwards the packets destined for the VM1 to the destination device through the tunnel between the source device and the destination device.
5. When no tunnel between the external device and the destination device (for example, VTEP-B-C) has been established, packets processed by the destination device are still fed back to the source device through a tunnel between the destination device and the source device.
6. If a tunnel between the source device and the external device (for example, VTEP-A-C) has not been updated, the source device relays the packets of the VM1 to the external device.

### Phase 2: Tunnel establishment between the external device and the destination device

7. The destination device establishes a tunnel from the destination device to the external device. The destination device may send packets of the VM1 to the external device based on the tunnel from the destination device to the external device, without forwarding the packets of the VM1 via the source device.

For example, the device B establishes a VTEP-B-C tunnel entry from the device B to the device C. A packet sent by the VM1 to the VM2 may bypass the device A, and is sent to the VM2 on the device C based on the VTEP-B-C tunnel entry. Optionally, the device B may receive only a packet of the VM1 forwarded via the device A, but does not make a reply for the packet of the VM1 via the device A any longer.

8. The external device establishes a tunnel from the external device to the destination device, and the external device may send packets of the VM1 to the destination device based on the tunnel from the external device to the destination device, and does not forward packets of the VM1 via the source device.

For example, the device C establishes a VTEP-C-B tunnel entry from the device C to the device B. A packet sent by the VM2 to the VM1 may bypass the device A, and is sent to the VM1 on the device B based on the VTEP-C-B tunnel entry. Optionally, the device B may receive only a packet of the VM1 forwarded via the device C, but does not send packets of the VM1 via the device A.

### Phase 3: Tunnel shutdown

9. The tunnel between the destination device and the source device and the tunnel between the external device and the source device are deleted.

A tunnel relay solution is based on the idea of make-before-break: After a tunnel between the destination device and the external device is gradually refreshed, a tunnel between the source device and the external device is disconnected. The key lies in that during live migration, offloading features including tunnel entry lookup, security rules, and connection tracking are implemented on the source device, while packet response is performed by the destination device.

The following describes each phase.

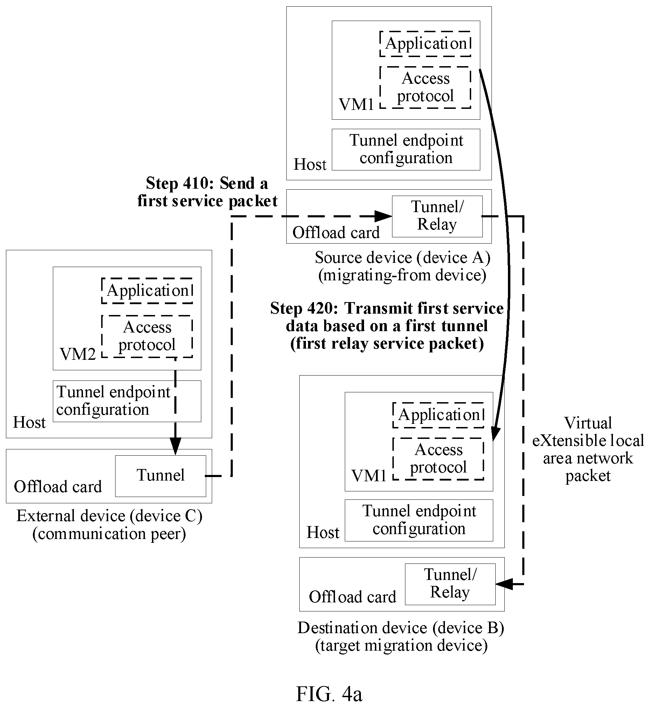

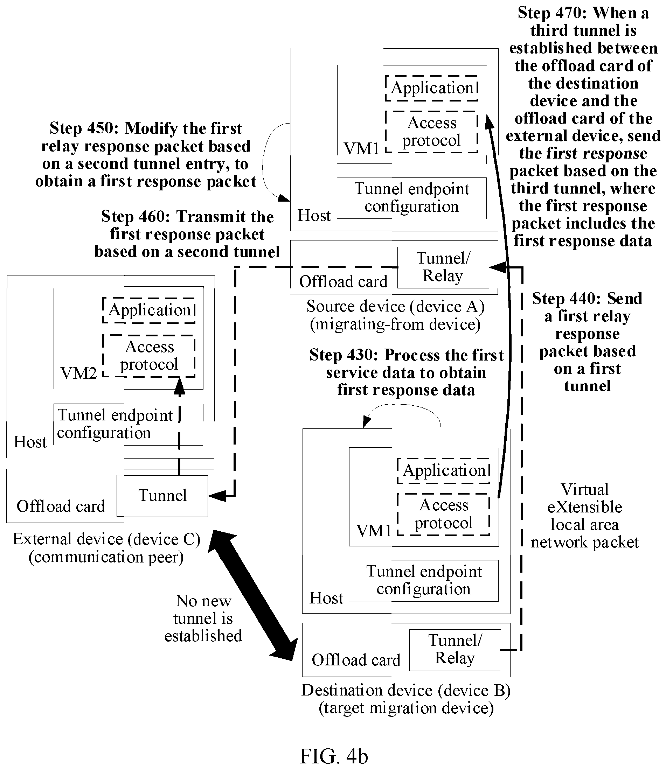

FIG. 4a and FIG. 4b are schematic flowcharts of relaying a packet to or from a virtual machine during virtual machine migration according to this application. Phase 1 is mainly described in detail herein. As shown in FIG. 4a, the method includes the following steps.

**Step 410: When a virtual machine VM1 is migrated from a source device to a destination device, an external device sends a first service packet to the source device, where the first service packet includes first service data.**

A virtual machine management and control platform (for example, a management device) may indicate the source device to initiate virtual machine migration. For example, the management device indicates a device A to migrate the VM1 from a device A to a device B.

After data copying of the VM1 is completed, the management device indicates the source device and the destination device to temporarily establish a related first tunnel dedicated to the VM1, so that the source device as the relay device provides a relay function, that is, the source device transmits the packet of the VM1 based on the first tunnel, and offloads the relay function to a virtual network interface card, in an offload card, associated with the VM1. The first tunnel is used to provide a path for data transmission between an offload card of the source device and an offload card of the destination device. The offload card of the source device and the offload card of the destination device add and store a first tunnel entry. The first tunnel entry may be a relay entry. The first tunnel entry indicates a transmission rule for data transmission between the offload card of the source device and the offload card of the destination device.

In some embodiments, the device A establishes a VXLAN tunnel from the device A to the device B, that is, VTEP-A-B, for transmitting the packet of the VM1 by the device A to the device B. The device B establishes a VXLAN tunnel from the device B to the device A, that is, VTEP-B-A, for transmitting the packet of the VM1 by the device B to the device A. As shown in Table 1, the offload card of the device A adds and stores the VTEP-A-B tunnel entry.

**Table 1**

| | Source address | Destination address | Identifier of a virtual machine | VNI |
|---|---|---|---|---|
| VTEP-A-B tunnel entry | Address of a device A | Address of a device B | VM1 | First VNI |

As shown in Table 2, the offload card of the device B adds and stores the VTEP-B-A tunnel entry.

**Table 2**

| | Source address | Destination address | Identifier of a virtual machine | VNI |
|---|---|---|---|---|
| VTEP-B-A tunnel entry | Address of a device B | Address of a device A | VM1 | First VNI |

As shown in Table 1 and Table 2, the source address is different from the destination address. The source address indicates a device that sends a packet. The destination address indicates a device that receives the packet.

In addition, the management device indicates the external device to refresh a tunnel entry of a migrated virtual machine. For example, a tunnel entry used by a device C to transmit a packet to the VM1 indicates to send the packet of the VM1 to the device A. The management device indicates the device C to refresh the tunnel entry used by the device C to transmit the packet to the VM1, that is, the tunnel entry indicates to send the packet of the VM1 to the device B.

Because the tunnel entry that is recorded by the external device and that is used to send a packet to the VM1 is not updated, for all traffic accessing the VM1, the external device still sends packets of the VM1 to the source device. For example, a VM2 on the device C sends packets to the VM1. Because a tunnel entry stored in the device C indicates to send packets to the device A, the device C still sends the packets of the VM1 to the device A.

**Step 420: The offload card of the source device transmits the first service data to the offload card of the destination device based on the first tunnel.**

The source device receives the first service packet sent by the external device to the VM1 of the source device, and the offload card of the source device modifies a VXLAN packet header of the first service packet based on the first tunnel entry, to obtain a first relay service packet. A packet header of the first relay service packet is different from the packet header of the first service packet, and the first relay service packet includes the first service data. It may be understood that a payload in the first service packet is not modified, and only the VXLAN packet header of the first service packet is modified, so that the first relay service packet is transmitted through the first tunnel between the source device and the destination device, to further increase a packet transmission rate.

In some embodiments, the first service packet further includes the identifier of the virtual machine, and the offload card of the source device determines the first tunnel entry based on the identifier of the virtual machine and the first VNI. A first virtual eXtensible local area network indicated by the first VNI includes the source device and the destination device. Optionally, the offload card of the source device stores a correspondence between the first VNI and a second VNI. The offload card of the source device obtains the second VNI from the first service packet, and queries the correspondence based on the second VNI, to obtain the first VNI corresponding to the second VNI.

For example, the device A receives the first service packet sent by the device C to the VM1, and the device A determines, based on the address of the device A, the identifier of the VM1, and the first VNI, the VTEP-A-B tunnel entry shown in Table 1, and modifies the VXLAN packet header of the first service packet to obtain the first relay service packet.

Table 3 shows the VXLAN packet header of the first service packet and a VXLAN packet header of the first relay service packet.

**Table 3**

| | Dst MAC | Src MAC | Dst IP | Src IP | VNI |
|---|---|---|---|---|---|
| VXLAN packet header that is not modified | VTEP-A-MAC | VTEP-C-MAC | VTEP-A-IP | VTEP-C-IP | Second VNI |
| Modified VXLAN packet header | VTEP-B-MAC | VTEP-A-MAC | VTEP-B-IP | VTEP-A-IP | First VNI |

As shown in Table 3, in the VXLAN packet header of the first service packet, a source address indicates a MAC address and an IP address of the device C, and a destination address indicates a MAC address and an IP address of the device A; and in the VXLAN packet header of the first relay service packet, a source address indicates the MAC address and the IP address of the device A, and a destination address indicates a MAC address and an IP address of the device B.

The offload card of the source device transmits the first relay service packet to the offload card of the destination device based on the first tunnel.

As shown in FIG. 4b, the method further includes the following steps.

**Step 430: The offload card of the destination device processes the first service data to obtain first response data.**

The offload card of the destination device receives the first relay service packet based on the first tunnel, where the first relay service packet includes the first service data sent by the external device to the virtual machine on the source device.

Because data of the VM1 has been migrated to the destination device, the offload card of the destination device may obtain the data of the VM1, and process the first service data based on the data of the VM1, to obtain the first response data.

**Step 440: When no third tunnel is established between the offload card of the destination device and the offload card of the external device, the offload card of the destination device sends a first relay response packet to the offload card of the source device based on the first tunnel, where the first relay response packet includes the first response data.**

The offload card of the destination device generates the first relay response packet based on the first tunnel entry. The packet header of the first relay service packet is different from a packet header of the first relay response packet. The first relay response packet includes the first response data.

In some embodiments, the first relay service packet further includes the identifier of the virtual machine, and the offload card of the destination device determines the first tunnel entry based on the identifier of the virtual machine and the first VNI, where the first virtual eXtensible local area network indicated by the first VNI includes the source device and the destination device.

For example, the device B receives a first relay service packet sent by the device A to the VM1, where the first relay service packet includes the address of the device A, the address of the device B, the identifier of the VM1, and the first VNI. The device B determines the VTEP-B-A tunnel entry in Table 2 based on the address of the device B, the identifier of the VM1, and the first VNI, and generates the first relay response packet, where the first relay response packet includes the address of the device A, the address of the device B, the identifier of the VM1, and the first VNI.

Table 4 shows the VXLAN packet header of the first relay service packet and a VXLAN packet header of the first relay response packet.

**Table 4**

| | Dst MAC | Src MAC | Dst IP | Src IP | VNI |
|---|---|---|---|---|---|
| VXLAN packet header of a first relay service packet | VTEP-B-MAC | VTEP-A-MAC | VTEP-B-IP | VTEP-A-IP | First VNI |
| VXLAN packet header of a first relay response packet | VTEP-A-MAC | VTEP-B-MAC | VTEP-A-IP | VTEP-B-IP | First VNI |

As shown in Table 4, in the VXLAN packet header of the first relay service packet, a source address indicates the MAC address and the IP address of the device A, and a destination address indicates the MAC address and the IP address of the device B; and in the VXLAN packet header of the first relay response packet, a source address indicates the MAC address and the IP address of the device B, and a destination address indicates the MAC address and the IP address of the device A.

The offload card of the destination device transmits the first relay response packet to the offload card of the source device based on the first tunnel. It may be understood that, when no third tunnel is established between the offload card of the destination device and the offload card of the external device, the destination device may return the first relay response packet along an original path, so that the external device may receive result data obtained by processing the first service data by the offload card of the destination device.

**Step 450: The offload card of the source device modifies the first relay response packet based on a second tunnel entry, to obtain a first response packet.**

The source device receives the first relay response packet sent by the destination device to the source device, and the offload card of the source device modifies the VXLAN packet header of the first relay response packet based on the second tunnel entry, to obtain the first response packet. The packet header of the first relay response packet is different from a packet header of the first response packet. The first response packet includes the first response data. The second tunnel entry indicates a transmission rule for data transmission between the offload card of the source device and the offload card of the external device.

It may be understood that a payload in the first relay response packet is not modified, and only the VXLAN packet header of the first relay response packet is modified, so that the first response packet is transmitted through the second tunnel between the source device and the external device.

In some embodiments, the first relay response packet further includes the identifier of the virtual machine, and the offload card of the source device determines the second tunnel entry based on the identifier of the virtual machine and the second VNI, where a second virtual eXtensible local area network indicated by the second VNI includes the source device and the external device.

For example, the device A receives a first relay response packet sent by the device B to the VM1, and the device A determines the VTEP-A-C tunnel entry based on the address of the device A, the identifier of the VM1, and the second VNI, and modifies a VXLAN packet header of the first relay response packet to obtain a first response packet. The second virtual eXtensible local area network indicated by the second VNI includes the source device and the external device.

Table 5 shows the VXLAN packet header of the first relay response packet and a VXLAN packet header of the first response packet.

**Table 5**

| | Dst MAC | Src MAC | Dst IP | Src IP | VNI |
|---|---|---|---|---|---|
| VXLAN packet header that is not modified | VTEP-A-MAC | VTEP-B-MAC | VTEP-A-IP | VTEP-B-IP | First VNI |
| Modified VXLAN packet header | VTEP-C-MAC | VTEP-A-MAC | VTEP-C-IP | VTEP-A-IP | Second VNI |

As shown in Table 5, in the VXLAN packet header of the first relay response packet, a source address indicates the MAC address and the IP address of the device B, and a destination address indicates the MAC address and the IP address of the device A; and in the VXLAN packet header of the first response packet, a source address indicates the MAC address and the IP address of the device A, and a destination address indicates the MAC address and the IP address of the device C.

**Step 460: The offload card of the source device transmits the first response packet to the external device based on the second tunnel.**

The second tunnel is used to provide a path for data transmission between the offload card of the source device and the offload card of the external device.

**Step 470: When a third tunnel is established between the offload card of the destination device and the offload card of the external device, the offload card of the destination device sends the first response packet to the offload card of the external device based on the third tunnel, where the first response packet includes the first response data.**

The offload card of the destination device generates the first response packet based on a third tunnel entry. The packet header of the first relay service packet is different from the packet header of the first response packet, and the first response packet includes the first response data.

In some embodiments, the first relay service packet further includes the identifier of the virtual machine, and the offload card of the destination device determines the third tunnel entry based on the identifier of the virtual machine and the second VNI, where the second virtual eXtensible local area network indicated by the second VNI includes the external device and the destination device.

For example, the device B receives the first relay service packet sent by the device A to the VM1, where the first relay service packet includes the address of the device A, the address of the device B, the identifier of the VM1, and the first VNI. The device B determines a VTEP-B-C tunnel entry based on the address of the device B, the identifier of the VM1, and the second VNI, and generates a first response packet, where the first response packet includes the address of the device B, the address of the device C, the identifier of the VM1, and the second VNI.

Table 6 shows a VXLAN packet header of the first relay service packet and a VXLAN packet header of the first response packet.

**Table 6**

| | Dst MAC | Src MAC | Dst IP | Src IP | VNI |
|---|---|---|---|---|---|
| VXLAN packet header of a first relay service packet | VTEP-B-MAC | VTEP-A-MAC | VTEP-B-IP | VTEP-A-IP | First VNI |
| VXLAN packet header of a first response packet | VTEP-C-MAC | VTEP-B-MAC | VTEP-C-IP | VTEP-B-IP | Second VNI |

As shown in Table 6, in the VXLAN packet header of the first relay service packet, a source address indicates the MAC address and the IP address of the device A, and a destination address indicates the MAC address and the IP address of the device B; and in the VXLAN packet header of the first response packet, a source address indicates the MAC address and the IP address of the device B, and a destination address indicates the MAC address and the IP address of the device C.

It may be understood that when the third tunnel is established between the offload card of the destination device and the offload card of the external device, the offload card of the destination device transmits the first response packet to the offload card of the external device based on the third tunnel, so that the external device can receive result data obtained by processing the first service data by the offload card of the destination device. The third tunnel is used to provide a path for data transmission between the offload card of the destination device and the offload card of the external device.

It should be noted that, when no tunnel from the offload card of the external device to the offload card of the destination device is established, the external device still sends the packet of the VM1 to the source device, and the source device forwards the packet of the VM1 to the destination device. When no tunnel from the offload card of the destination device to the offload card of the external device is established, the destination device still sends a response packet of the VM1 to the source device, and the source device forwards the response packet of the VM1 to the external device. When a tunnel in the direction from the offload card of the destination device to the offload card of the external device is established, the destination device still sends a response packet of the VM1 to the external device, without forwarding the response packet of the VM1 to the external device via the source device.

When a tunnel in the direction from the offload card of the external device to the offload card of the destination device is established, the external device still sends the packet of the VM1 to the destination device, without forwarding the packet of the VM1 to the destination device via the source device. When no tunnel in the direction from the offload card of the destination device to the offload card of the external device is established, the destination device still sends the response packet of the VM1 to the source device, and the source device forwards the response packet of the VM1 to the external device. When a tunnel in the direction from the offload card of the destination device to the offload card of the external device is established, the destination device still sends the response packet of the VM1 to the external device, without forwarding the response packet of the VM1 to the external device via the source device.

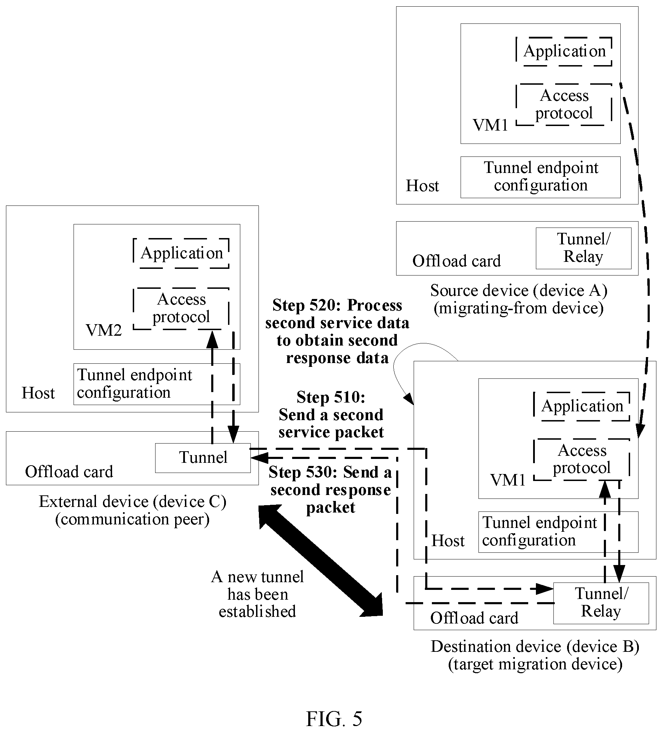

FIG. 5 is a schematic flowchart of relaying a packet to or from a virtual machine during virtual machine migration according to this application. Phase 2 is mainly described in detail herein. As shown in FIG. 5, the method includes the following steps.

**Step 510: When a third tunnel is established between an offload card of a destination device and an offload card of an external device, the external device sends a second service packet to the destination device, where the second service packet includes second service data.**

Because the third tunnel is established between the offload card of the destination device and the offload card of the external device, a tunnel entry that is recorded by the external device for sending packets to a VM1 is updated. For all traffic accessing the VM1, the external device sends packets of the VM1 to the destination device. For example, a VM2 on a device C sends packets to the VM1. Because a tunnel entry stored in the device C indicates to send packets to a device B, the device C sends the packets of the VM1 to the device B.

For example, Table 7 shows the third tunnel entry.

**Table 7**

| | Source address | Destination address | Identifier of a virtual machine | VNI |
|---|---|---|---|---|
| VTEP-C-B tunnel entry | Address of a device C | Address of a device B | VM1 | Second VNI |

A VXLAN packet header of the second service packet may include the address of the device C, the address of the device B, the identifier of the VM1, and the second VNI that are shown in Table 7.

**Step 520: The offload card of the destination device processes the second service data to obtain second response data.**

The offload card of the destination device receives, based on the third tunnel, the second service packet sent by the offload card of the external device. Because data of the VM1 has been migrated to the destination device, the offload card of the destination device may obtain the data of the VM1, and process the first service data based on the data of the VM1, to obtain the first response data.

**Step 530: The offload card of the destination device sends a second response packet to the offload card of the external device based on the third tunnel, where the second response packet includes the second response data.**

The offload card of the destination device generates the second response packet based on the third tunnel entry. A packet header of the second service packet is different from a packet header of the second response packet, and the second response packet includes the second response data.

In some embodiments, the second service packet further includes the identifier of the virtual machine, and the offload card of the destination device determines the third tunnel entry based on the identifier of the virtual machine and the second VNI, where a second virtual eXtensible local area network indicated by the second VNI includes the external device and the destination device.

For example, the device B receives a second service packet sent by the device C to the VM1, and the device B determines a VTEP-B-C tunnel entry based on the address of the device B, the identifier of the VM1, and the second VNI, and generates a second response packet.

Table 8 shows a VXLAN packet header of the second service packet and a VXLAN packet header of the second response packet.

**Table 8**

| | Dst MAC | Src MAC | Dst IP | Src IP | VNI |
|---|---|---|---|---|---|
| VXLAN packet header of a second service packet | VTEP-B-MAC | VTEP-C-MAC | VTEP-B-IP | VTEP-C-IP | Second VNI |
| VXLAN packet header of a second response packet | VTEP-C-MAC | VTEP-B-MAC | VTEP-C-IP | VTEP-B-IP | Second VNI |

As shown in Table 8, in the VXLAN packet header of the second service packet, a source address indicates a MAC address and an IP address of the device C, and a destination address indicates a MAC address and an IP address of the device B; and in the VXLAN packet header of the second response packet, a source address indicates the MAC address and the IP address of the device B, and a destination address indicates the MAC address and the IP address of the device C.

It should be noted that, before the destination device restarts the virtual machine, the destination device may forward the packet of the VM1 through the source device, so that the offload card of the destination device obtains result data by processing the first service data, to avoid a packet loss during virtual machine migration. After a tunnel is established between the destination device and the external device, the external device and the destination device may transmit a packet to or from the VM1 based on the tunnel. In the foregoing solution, the destination device can restart the virtual machine.

After the tunnel is established between the destination device and the external device, the source device and the destination device may delete a tunnel between the source device and the destination device.

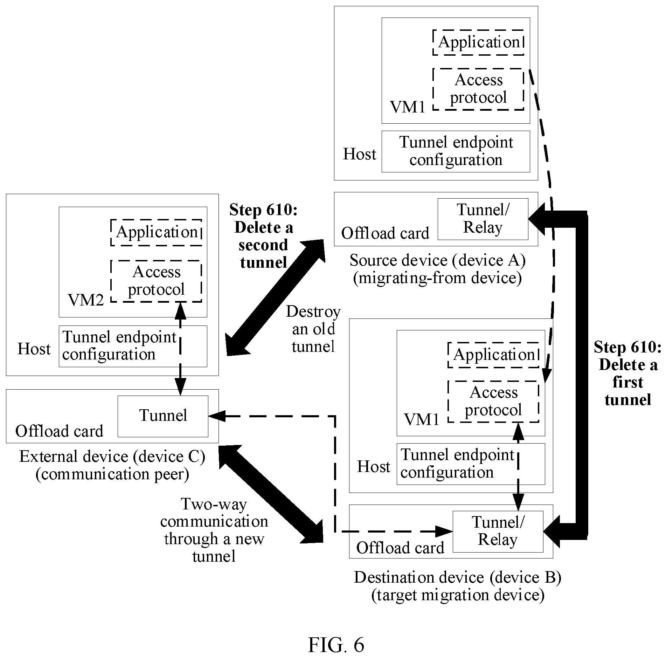

FIG. 6 is a schematic flowchart of transmitting a packet to or from a virtual machine during virtual machine migration according to this application. Phase 3 is mainly described in detail herein. As shown in FIG. 6, the method includes the following step:

**Step 610: An offload card of a source device deletes a first tunnel and a second tunnel according to an instruction.**

The source device destroys a tunnel between the source device and a destination device according to an instruction of a management device. An offload card of the source device deletes a tunnel entry between the source device and an external device, and the offload card of the source device deletes a tunnel entry between the source device and the destination device.

An offload card of the destination device deletes the tunnel entry between the source device and the destination device.

It should be noted that the source device and the destination device destroy the tunnel between the source device and the destination device after ensuring that packet processing for a VM1 is completed.

This application provides a virtual machine migration method. (1) A lossless relay mechanism for a packet is designed based on an offloading capability of an offload card and a tunneling technology. After a virtual machine is migrated from a source device to a destination device and an association relationship with an I/O passthrough virtual network interface card of the destination device is established, but before the virtual machine is started, an association relationship between the source device and an I/O passthrough virtual network interface card of the source device is still retained, an offloading capability of a virtual network interface card is used, and an I/O passthrough virtual network interface card of the source device is used as a dedicated tunnel relay device, and sends to-be-sent and to-be-received packets to the I/O passthrough virtual network interface card of the destination device associated with the destination device for processing. When tunnel entries are not completely synchronized, the I/O passthrough virtual network interface card of the destination device may forward a processed packet to an external device through the I/O passthrough virtual network interface card of the source device. When the tunnel entries are completely synchronized, the I/O passthrough virtual network interface card of the destination device may directly forward the processed packet to the external device.

(2) Based on the lossless relay mechanism, the offloading capability of the offload card, and an I/O passthrough capability, a capability of a relay is implemented at the offload card to support low-latency processing for a packet. That is, the offloading capability of the offload card is used, so that the I/O passthrough virtual network interface card has a capability of independently processing a packet and DMA data without participation of a CPU and a VMM. A packet does not need to be stored in a destination VMM, and can be processed in real time at the offload card and forwarded to the external device in a timely manner based on a tunnel entry. The I/O passthrough virtual network interface card of the source device supports replacement and forwarding of a packet tunnel header. There is no need to store a packet, nor to wait until the virtual machine is fully started to read data from the destination VMM.

(3) A traffic relay procedure for lossless live migration in a high-performance network scenario is provided to enhance applicability in a high-bandwidth scenario and maintain network performance advantages of a live migration process. To further expand application scenarios of lossless live migration, a complete traffic relay procedure is designed based on the lossless tunnel relay mechanism. At various possible phases before the virtual machine is started, an operational mechanism of the tunnel relay solution is described in the case of maintaining the network performance advantages of the live migration process. Furthermore, this procedure achieves decoupling from participation of the destination VMM in storage relay and DMA.

It may be understood that, to implement functions in the foregoing embodiments, a computer device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

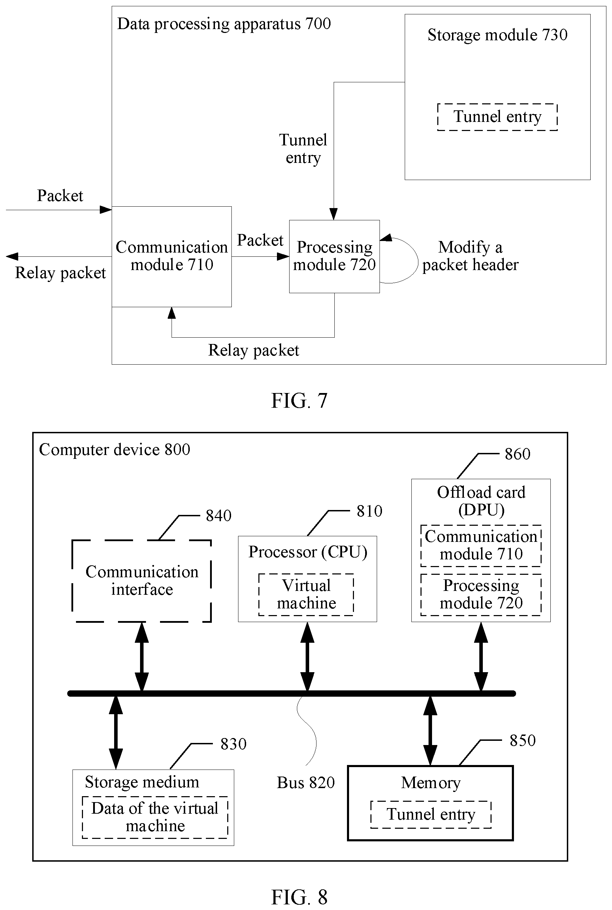

The foregoing describes in detail the virtual machine migration method provided in this application with reference to FIG. 1 to FIG. 6. The following describes a data processing apparatus provided in this application with reference to FIG. 7.

FIG. 7 is a diagram of a structure of a possible data processing apparatus according to this application. The data processing apparatus may be configured to implement functions of the offload card of the source device in the foregoing method embodiments, and thus can also achieve the beneficial effects provided by the foregoing method embodiments. In this embodiment, the data processing apparatus may be the computer device shown in FIG. 2, or a module (such as a chip) applied to a server.

As shown in FIG. 7, a data processing apparatus 700 includes a communication module 710, a processing module 720, and a storage module 730. The data processing apparatus 700 is configured to implement the functions of the offload card of the source device in the method embodiment shown in FIG. 4a and FIG. 4b.

The communication module 710 is configured to receive a first service packet sent by an external device to a virtual machine on a source device, where the first service packet includes first service data.

The processing module 720 is configured to transmit the first service data to an offload card of a destination device based on a first tunnel, where the first tunnel is used to provide a path for data transmission between the source device and the destination device. For example, the processing module 720 is configured to perform step 420 in FIG. 4a and FIG. 4b.

Optionally, the processing module 720 is further configured to modify the first service packet based on a first tunnel entry, to obtain a first relay service packet.

Optionally, the processing module 720 is configured to modify a first relay response packet based on a second tunnel entry, to obtain a first response packet. For example, the processing module 720 is configured to perform step 450 in FIG. 4a and FIG. 4b.

Optionally, the communication module 710 is configured to transmit the first response packet to the external device based on a second tunnel. For example, the communication module 710 is configured to perform step 460 in FIG. 4a and FIG. 4b.

The storage module 730 is configured to store the tunnel entries.

It should be understood that the data processing apparatus 700 in this embodiment of this application may be implemented by using an application-specific integrated circuit (Application-Specific Integrated Circuit, ASIC) or a programmable logic device (Programmable Logic Device, PLD). The PLD may be a complex programmable logical device (Complex Programmable Logical Device, CPLD), a field-programmable gate array (Field-Programmable Gate Array, FPGA), a universal array logic (Generic Array Logic, GAL), a DPU, an acceleration card, an offload card, or any combination thereof. Alternatively, when the method shown in FIG. 4a and FIG. 4b is implemented by software, the data processing apparatus 700 and modules of the data processing apparatus 700 may also be software modules.

The data processing apparatus 700 according to this embodiment of this application may correspondingly perform the method described in embodiments of this application, and the foregoing and other operations and/or functions of the units of the data processing apparatus 700 are respectively used to implement corresponding procedures of the method in FIG. 4a and FIG. 4b. For brevity, details are not described herein again.

FIG. 8 is a diagram of a structure of a computer device 800 according to this application. As shown in FIG. 8, the computer device 800 includes a processor 810, a bus 820, a storage medium 830, a communication interface 840, a memory 850 (which may also be referred to as a main memory (main memory) unit), and an offload card 860. The processor 810, the offload card 860, the storage medium 830, the memory 850, and the communication interface 840 are connected through the bus 820.

It should be understood that, in this embodiment, the processor 810 may be a CPU, or the processor 810 may be another general-purpose processor, a digital signal processor (Digital Signal Processor, DSP), an ASIC, an FPGA or another programmable logic device, a discrete gate or a transistor logic device, a discrete hardware component, or the like. The general-purpose processor may be a microprocessor or any conventional processor or the like.

The computer device 800 may further include a GPU, an NPU, a microprocessor, an ASIC, or one or more integrated circuits configured to control program execution of the solutions of this application. For example, the offload card 860 may be a DPU.

The communication interface 840 is configured to implement communication between the computer device 800 and an external device or a component.

In this application, when the computer device 800 is configured to implement the functions of the offload card of the source device shown in FIG. 4a and FIG. 4b, the offload card 860 is configured to receive a packet, so that the offload card 860 is configured to forward the packet based on a tunnel entry stored in the memory 850.

The bus 820 may include a path, configured to transfer information between the foregoing components (such as the processor 810, the memory 850, and the storage medium 830). In addition to a data bus, the bus 820 may further include a power bus, a control bus, a status signal bus, and the like. However, for clear description, various types of buses in the figures are marked as the bus 820. The bus 820 may be a peripheral component interconnect express (Peripheral Component Interconnect Express, PCIe) bus, an extended industry standard architecture (Extended Industry Standard Architecture, EISA) bus, a unified bus (Unified Bus, Ubus or UB), a compute express link (Compute Express Link, CXL), a cache coherent interconnect for accelerators (Cache Coherent Interconnect for Accelerators, CCIX), or the like. The bus 820 may be classified into an address bus, a data bus, a control bus, and the like.

In an example, the computer device 800 may include a plurality of processors. The processor may be a multi-CPU (multi-CPU) processor. The processor herein may be one or more devices, circuits, and/or compute units configured to process data (for example, computer program instructions).

It should be noted that FIG. 8 shows only an example in which the computer device 800 includes one processor 810 and one offload card 860. The processor 810 and the offload card 860 each indicate a type of device or component. In a specific embodiment, a quantity of each type of device or component may be determined based on a service requirement. For example, the computer device 800 includes a plurality of offload cards.

The memory 850 may be a volatile memory pool or a nonvolatile memory pool, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not restrictive description, many forms of RAM may be used, for example, a static random access memory (Static RAM, SRAM), a dynamic random access memory (DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). The memory 850 is configured to store tunnel entries and the like.

The storage medium 830 may correspond to a storage medium, for example, a magnetic disk, such as a solid-state drive, configured to store information such as data of a virtual machine in the foregoing method embodiment.

The computer device 800 may be a general-purpose device or a dedicated device. Optionally, the computer device 800 may alternatively be a server or another device having a computing capability.

It should be understood that the computer device 800 according to this embodiment may correspond to the data processing apparatus 700 in this embodiment, and the offload card 860 is configured to implement functions of the communication module 710 and the processing module 720 of the data processing apparatus 700, and may correspond to a corresponding body for performing any method in FIG. 4a and FIG. 4b, FIG. 5, or FIG. 6. In addition, the foregoing and other operations and/or functions of the communication module 710 and the processing module 720 of the data processing apparatus 700 are respectively used to implement corresponding procedures of the methods in FIG. 4a and FIG. 4b, FIG. 5, or FIG. 6. For brevity, details are not described herein again.

The method steps in embodiments may be implemented in a hardware manner, or may be implemented by executing software instructions by the processor. The software instructions include corresponding software modules. The software modules may be stored in a RAM, a flash memory, a ROM, a PROM, an EPROM, an EEPROM, a register, a hard disk, a removable hard disk, a CD-ROM, or a storage medium of any other form known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a compute device. Certainly, the processor and the storage medium may alternatively exist in the compute device as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc (Digital Video Disc, DVD), or may be a semiconductor medium, for example, a solid-state drive (Solid-State Drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A virtual machine migration method, comprising:
when a virtual machine is migrated from a first computer device to a second computer device, receiving, by the first computer device, a first service packet sent by a third computer device to the virtual machine on the first computer device, wherein the first service packet comprises first service data, and the third computer device comprises a computer device other than the first computer device and the second computer device; and
transmitting, by an offload card of the first computer device, the first service data to an offload card of the second computer device based on a first tunnel, wherein the first tunnel is used to provide a path for data transmission between the offload card of the first computer device and the offload card of the second computer device.

2. The method according to claim 1, wherein the transmitting, by the offload card of the first computer device, the first service data to the offload card of the second computer device based on the first tunnel comprises:
modifying, by the offload card of the first computer device, the first service packet based on a first tunnel entry, to obtain a first relay service packet, wherein a packet header of the first relay service packet is different from a packet header of the first service packet, the first relay service packet comprises the first service data, and the first tunnel entry indicates a transmission rule for data transmission between the offload card of the first computer device and the offload card of the second computer device; and
transmitting, by the offload card of the first computer device, the first relay service packet to the offload card of the second computer device based on the first tunnel.

3. The method according to claim 2, wherein a source address in the first service packet indicates an address of the third computer device, and a destination address in the first service packet indicates an address of the first computer device; and
the modifying, by the offload card of the first computer device, the first service packet based on the first tunnel entry, to obtain the first relay service packet comprises:
modifying the source address in the first service packet to the address of the first computer device, modifying the destination address in the first service packet to an address of the second computer device, and modifying a virtual eXtensible local area network identifier VNI in the first service packet to a first VNI, to obtain the first relay service packet, wherein a first virtual eXtensible local area network indicated by the first VNI comprises the first computer device and the second computer device.

4. The method according to claim 2 or 3, wherein the first service packet further comprises an identifier of the virtual machine, and the method further comprises:
obtaining, by the offload card of the first computer device, the first tunnel entry based on the identifier of the virtual machine and the first VNI.

5. The method according to any one of claims 1 to 4, wherein before the transmitting, by the offload card of the first computer device, the first service data to the offload card of the second computer device based on the first tunnel, the method further comprises:
establishing, by the offload card of the first computer device, the first tunnel.

6. The method according to any one of claims 1 to 5, wherein after the transmitting, by the offload card of the first computer device, the first service data to the offload card of the second computer device based on the first tunnel, the method further comprises:
receiving, by the offload card of the first computer device based on the first tunnel, a first relay response packet sent by the offload card of the second computer device, wherein the first relay response packet comprises first response data, and the first response data is result data obtained by processing the first service data by the offload card of the second computer device;
modifying, by the offload card of the first computer device, the first relay response packet based on a second tunnel entry, to obtain a first response packet, wherein a packet header of the first relay response packet is different from a packet header of the first response packet, the first response packet comprises the first response data, and the second tunnel entry indicates a transmission rule for data transmission between the offload card of the first computer device and an offload card of the third computer device; and
transmitting, by the offload card of the first computer device based on a second tunnel, the first response packet to the third computer device, wherein the second tunnel is used to provide a path for data transmission between the offload card of the first computer device and the offload card of the third computer device.

7. The method according to claim 6, wherein a source address in the first relay response packet indicates the address of the second computer device, and a destination address in the first relay response packet indicates the address of the first computer device; and
the modifying, by the offload card of the first computer device, the first relay response packet based on the second tunnel entry, to obtain the first response packet comprises:
modifying the source address in the first relay response packet to the address of the first computer device, modifying the destination address in the first relay response packet to the address of the third computer device, and modifying a VNI in the first relay response packet to a second VNI, to obtain the first relay service packet, wherein a second virtual eXtensible local area network indicated by the second VNI comprises the first computer device and the third computer device.

8. The method according to claim 6 or 7, wherein the first relay response packet further comprises the identifier of the virtual machine, and the method further comprises:
obtaining, by the offload card of the first computer device, the second tunnel entry based on the identifier of the virtual machine and the second VNI.

9. The method according to claim 8, wherein the method further comprises:
deleting, by the offload card of the first computer device, the first tunnel and the second tunnel.

10. The method according to any one of claims 1 to 9, wherein the method further comprises:
when the virtual machine is migrated from the second computer device to the first computer device, receiving, by the offload card of the first computer device, the first relay service packet based on the first tunnel, wherein the first relay service packet comprises the first service data sent by the third computer device to the virtual machine on the second computer device, and the first tunnel is used to provide the path for data transmission between the offload card of the first computer device and the offload card of the second computer device;
processing, by the offload card of the first computer device, the first service data to obtain first response data; and
when no third tunnel is established between the offload card of the first computer device and the offload card of the third computer device, sending, by the offload card of the first computer device, the first relay response packet to the offload card of the second computer device based on the first tunnel, wherein the first relay response packet comprises the first response data, the source address in the first relay response packet indicates the address of the first computer device, the destination address indicates the address of the second computer device, and the third tunnel is used to provide a path for data transmission between the offload card of the second computer device and the offload card of the third computer device; or
when the third tunnel is established between the offload card of the first computer device and the offload card of the third computer device, sending, by the offload card of the first computer device, the first response packet to the offload card of the third computer device based on the second tunnel, wherein the first response packet comprises the first response data.

11. A data processing apparatus, wherein when a virtual machine is migrated from a first computer device to a second computer device, the apparatus comprises:
a communication module, configured to receive a first service packet sent by a third computer device to the virtual machine on the first computer device, wherein the first service packet comprises first service data; and
a processing module, configured to transmit the first service data to an offload card of the second computer device based on a first tunnel, wherein the first tunnel is used to provide a path for data transmission between the first computer device and the second computer device.

12. The apparatus according to claim 11, wherein
the processing module is specifically configured to modify the first service packet based on a first tunnel entry, to obtain a first relay service packet, wherein a packet header of the first relay service packet is different from a packet header of the first service packet, the first relay service packet comprises the first service data, and the first tunnel entry indicates a transmission rule for data transmission between an offload card of the first computer device and the offload card of the second computer device; and
the communication module is specifically configured to transmit the first relay service packet to the offload card of the second computer device based on the first tunnel.

13. The apparatus according to claim 12, wherein a source address in the first service packet indicates an address of the third computer device, and a destination address in the first service packet indicates an address of the first computer device; and
the processing module is specifically configured to: modify the source address in the first service packet to the address of the first computer device, modify the destination address in the first service packet to an address of the second computer device, and modify a virtual eXtensible local area network identifier VNI in the first service packet to a first VNI, to obtain the first relay service packet, wherein a first virtual eXtensible local area network indicated by the first VNI comprises the first computer device and the second computer device.

14. The apparatus according to any one of claims 11 to 13, wherein
the communication module is further configured to receive, based on the first tunnel, a first relay response packet sent by the offload card of the second computer device, wherein the first relay response packet comprises first response data, and the first response data is result data obtained by processing the first service data by the offload card of the second computer device;
the processing module is further configured to modify the first relay response packet based on a second tunnel entry, to obtain a first response packet, wherein a packet header of the first relay response packet is different from a packet header of the first response packet, the first response packet comprises the first response data, and the second tunnel entry indicates a transmission rule for data transmission between the offload card of the first computer device and an offload card of the third computer device; and
the communication module is further configured to transmit the first response packet to the third computer device based on a second tunnel, wherein the second tunnel is used to provide a path for data transmission between the offload card of the first computer device and the offload card of the third computer device.

15. An offload card, comprising a processor and a power supply circuit, wherein the power supply circuit is configured to supply power to the processor, and the processor is configured to perform operation steps of the method according to any one of claims 1 to 10.

16. A computer device, wherein the computer device comprises a processor and an offload card; the processor is configured to run a virtual machine; and when the virtual machine is migrated to another computer device, the offload card is configured to perform operation steps of the method according to any one of claims 1 to 10, so as to implement relaying of a packet of the virtual machine after virtual machine migration.

17. A communication system, wherein the communication system comprises at least two computer devices, the computer device comprises the offload card according to claim 15, and the offload card is configured to perform operation steps of the method according to any one of claims 1 to 10.
